# EUROPÄISCHE PATENTSCHRIFT

(11) **EP 1 527 468 B1**
(45) Veröffentlichungstag und Bekanntmachung des Hinweises auf die Patenterteilung: **29.05.2013**
(21) Anmeldenummer: 03760663.9
(22) Anmeldetag: 20.06.2003
(51) Int. Cl.: H01H 25/04

(54) **EINRICHTUNG ZUR ERFASSUNG EINER MECHANISCHEN BETÄTIGUNG EINES EINGABEELEMENTES MITTELS DIGITALER TECHNIK UND VERFAHREN ZUR VERARBEITUNG UND UMWANDLUNG DES DIGITALEN EINGABESIGNALS IN BEFEHLE ZUR STEUERUNG EINES VERBRAUCHERS**
DEVICE FOR DETECTING A MECHANICAL ACTUATION OF AN INPUT ELEMENT BY USING DIGITAL TECHNOLOGY, AND METHOD FOR PROCESSING AND CONVERTING THE DIGITAL INPUT SIGNAL INTO COMMANDS FOR CONTROLLING A LOAD
DISPOSITIF PERMETTANT DE DETECTER L'ACTIONNEMENT MECANIQUE D'UN ELEMENT D'ENTREE A L'AIDE DE LA TECHNIQUE NUMERIQUE ET PROCEDE DE TRAITEMENT ET DE CONVERSION DU SIGNAL D'ENTREE NUMERIQUE EN INSTRUCTIONS POUR LA COMMANDE D'UNE CHARGE

(30) Priorität: 24.06.2002 DE 10228185
(43) Veröffentlichungstag der Anmeldung: 04.05.2005
(73) Patentinhaber: Völckers, Oliver, 14055 Berlin (DE)
(72) Erfinder: Völckers, Oliver, 14055 Berlin (DE)
(74) Vertreter: Burghardt, Dieter
(86) Internationale Anmeldenummer: PCT/EP2003/006517
(87) Internationale Veröffentlichungsnummer: WO 2004/001782

(56) Entgegenhaltungen:
- EP-A- 0 540 147
- EP-A- 0 640 937
- DE-A- 3 426 922
- US-A- 5 670 955
- US-A- 5 815 139
- US-A1- 2002 009 193
- US-B1- 6 313 731
- US-B1- 6 313 826
- PATENT ABSTRACTS OF JAPAN vol. 1996, no. 09, 30. September 1996 (1996-09-30) & JP 08 124461 A (MATSUSHITA ELECTRIC IND CO LTD), 17. Mai 1996 (1996-05-17)

## Beschreibung

Einrichtung zur Erfassung einer mechanischen Betätigung eines Eingabeelementes mittels digitaler Technik und Verfahren zur Verarbeitung und Umwandlung des digitalen Eingabesignals in Befehle zur Steuerung eines Verbrauchers.

Die vorliegende Erfindung betrifft eine Einrichtung zur Erfassung von durch mechanische Betätigung eines Eingabeelementes hervorgerufene Eingabeimpulsen, die bei der Betätigung von der Bedienung von elektronischen Geräten dienenden Eingabeelementen durch eine Bedienperson hervorgerufen werden und ein Verfahren zur Verarbeitung des auf die Position der Betätigung bezogenen und erfaßbaren Wertes des Eingabeimpulses.

Folgende Techniken sind bekannt, um die Position des Schaltelementes an elektronischen Geräten bei der Betätigung desselben im Sinne einer mechanischen Bewegung zu bestimmen:
- Sogenannte analoge Joysticks von Computerspielen enthalten zwei Potentiometer, die mechanisch an die Neigung des Steuerknüppels gekoppelt sind und deren elektrischer Widerstand den x- und y-Achsen der Schrägstellung entspricht.
- Lochscheiben können in Verbindung mit Lichtschranken (Optokopplern) digitale Signale liefern, die die Position eines Schaltelements rückmelden. Bei einem ausreichenden Betätigungsweg kann eine hohe Auflösung erreicht werden.
- Kraftsensoren wie Dehnungsmessstreifen (Strain Gauges), kraftabhängige Widerstände (Force Sensing Resistors, FSR) oder Hall-Sensoren liefern analoge Signale, deren Werte den auf den Sensor ausgeübten Kräften entsprechen. Dies ist bereits bei einem geringen Betätigungsweg möglich.
- Wipptasten, oft als 2fach oder 4fach-Cursortastenblock ausgeführt, messen eine Stufe in jede von zwei oder vier Richtungen sowie manchmal eine Betätigung der Mittelstellung. Mit erheblichem mechanischen Aufwand können spezielle Mehrfachschalter auch einige Stufen mehr bestimmen.

Die Lösung mit Potentiometern ist mechanisch aufwendig und dadurch schwer sowie störanfällig gegen Erschütterungen. Für mobile Geräte sind Potentiometer deshalb weniger geeignet. Die Lochscheiben mit Optokoppler sind kleiner, leichter und liefern ein digitales Signal. Auch sie sind jedoch anfällig gegen mechanische Erschütterungen und außerdem gegen Verschmutzung.

Kraftsensoren können dagegen sehr klein und mechanisch robust gebaut werden. Allerdings erfordern sie eine aufwendige elektronische Ansteuerung mit einer Umrechnung der gelieferten Analogsignale. Diese hohen Kosten verhindern den massenhaften Einsatz in elektronischen Geräten.

Wipptasten sind andererseits weit verbreitet, weil sie klein, leicht, robust und preiswert sind. Da sie jedoch nur 2 bis 5 Schaltstellungen bieten, sind sie den wachsenden Anforderungen an die Bedienung grafischer Software-Oberflächen nicht gewachsen.

Nach der US-5,815,139 ist eine variabel betätigbare EingabeEinrichtung zur Steuerung eines Cursors auf dem Display eines Personal Computers bekannt. Diese Einrichtung benutzt ein Eingabeelement, das in einer Ebene beliebig bewegbar ist, mit dem auch bei Neigung desselben unter einem mechanischen Druck die wechselnden Positionen des auf das Eingabeelement ausgeübten Druckes übertragen auf einen flächenförmigen Sensor, registriert werden können. Durch Messung mehrerer, variabler Widerstandswerte lassen sich der Neigungswinkel und die auf das Eingabeelement ausgeübten Kräfte bestimmen. Dabei werden analoge Meßwerte geliefert, die durch Temperaturabhängigkeit hervorgerufen Ungenauigkeiten aufweisen können. Die Weiterverarbeitung der Meßwerte erfordert eine Digitalisierung derselben, wodurch die Ansteuerelektronik aufwendig ist.

US 5,670,955 A offenbart eine Eingabeeinrichtung gemäß dem Oberbegriff des Anspruchs 1.

Zur Übertragung von einem Eingabeelement aufgezwungenen Bewegungsabläufen sind hinreichend analoge Übertragungs-systeme zur Übermittlung von Befehlen an mechanische Verbraucher bekannt. Diese sind in der Herstellung sehr aufwendig und damit teuer. Diese mechanischen Verbraucher lassen sich auch durch elektrische Übertragungssysteme steuern, allerding fehlt es hierfür generell an kostengünstig herstellbaren Einrichtungen zur Erfassung der mechanischen Betätigung eines Eingabeelementes, die die Position des Eingabeelementes bei der mechanischen Betätigung desselben in allen Bewegungsphasen exakt nachbilden können.

Das Ziel der Erfindung besteht in der Schaffung einer Einrichtung zur Erfassung von durch eine mechanische Betätigung eines Eingabeelementes eines die Betätigungsposition bestimmenden Schaltelementes hervorgerufenen Eingabeimpulsen, mit einer kleinen und robusten Bauweise, einem geringen Geräteaufwand, einer schnellen Bedienbarkeit und einer fehlertderauten Verarbeitung der sich ergebenden Eingabeimpulse für elektronischer Geräte.

Der Erfindung liegt die Aufgabe zugrunde, eine Einrichtung zur Erfassung und Verarbeitung von Eingabeimpulsen, wobei einzelne Kontaktpunkte ausgefällen sein können die durch eine mechanische Betätigung eines in einer Ebene federnd aufgehängten und aus dieser heraus sowohl in senkrechter als auch in einer schrägen Richtung unter einem bestimmten Winkel zur Senkrechten betätigbaren Eingabeelementes durch Übertragung auf ein die Betätigungsposition erfassendes Schaltelement hervorgerufen werden, einschließlich der die Betätigungsposition erfassenden Einrichtung und ein Verfahren zur Verarbeitung der bei der Erfassung von bei der Betätigung des Eingabeelementes anfallenden Eingabeimpulse für die Bedienung von Software-Oberflächen in kompakten elektronischen Geräten und zur Cursorsteuerung für mobile elektronische Geräte zu entwickeln.

Die Aufgabe wird durch die im kennzeichnenden Teil genannten Merkmale der unabhängigen Patentansprüche gelöst.

Erfindungsgemäß wird das Bedienelement, z.B. eine Taste oder ein Joystick gegen eine Federkraft schräggestellt, wobei eine elektrisch leitende Fläche an der Unterseite des Bedienelements eine Kontaktmatrix an wechselnden Positionen berührt und dadurch elektrische Kontakte schließt. Die ausgelösten Kontakte stehen in Beziehung zur Schrägstellung des Bedienelements, wobei die beaufschlagten Kontakte Meßwerte liefern, die von einer Elektronik ausgewertet werden und nach einem erfindungsgemäßen Verfahren die Schrägstellung, die Auslöserichtung und die Andruckkraft bestimmt werden.

Die Erfindung soll an einem Ausführungsbeispiel näher erläutert werden. In der zugehörigen Zeichnung zeigen:
- Fig. 1: einen prinzipiellen Aufbau der erfindungsgemäßen Einrichtung,
- Fig. 2: Bedienmöglichkeiten eines Eingabeelementes einer erfindungsgemäß ausgebildeten Einrichtung bei einer Betätigung in senkrechter Richtung an unterschiedlichen Positionen,
- Fig. 3: Bedienmöglichkeiten eines Eingabeelementes einer erfindungsgemäß ausgebildeten Einrichtung bei einer Betätigung in senkrechter und danach schrägen Betätigung,
- Fig. 4: Bedienmöglichkeiten eines Eingabeelementes einer erfindungsgemäß ausgebildeten Einrichtung bei einer Betätigung in schräger Betätigungsrichtung,
- Fig. 5: eine Ausführung des erfindungsgemäß ausgebildeten Eingabeelementes als Tasten in Stellung nach einer Betätigung in senkrechter Richtung in der Mitte des Eingabeelementes mit geringer Anpreßkraft,
- Fig. 6: eine Kontaktschließung nach Fig. 5
- Fig. 7: eine Ausführung des erfindungsgemäß ausgebildeten Eingabeelementes als Tasten in Stellung nach Betätigung in senkrechter Richtung in der Mitte des Eingabeelementes mit starker Anpreßkraft,
- Fig. 8: eine Kontaktschließung nach Fig. 7
- Fig. 9: eine Ausführung des erfindungsgemäß ausgebildeten Eingabeelementes als Tasten in Stellung nach einer Betätigung in einer mittleren schrägen Richtung auf einer Seite des Eingabeelementes,
- Fig. 10: eine Kontaktschließung nach Fig. 9,
- Fig. 11: eine Kontaktschließung nach Fig. 9 mit einem variierten Anpreßdruck,
- Fig. 12: eine Ausführung des erfindungsgemäß ausgebildeten Eingabeelementes als Tasten in Stellung nach einer Betätigung in einer einseitigen schrägen Richtung auf einer äußeren Seite des Eingabeelementes,
- Fig. 13: eine Kontaktschließung nach Fig. 12,
- Fig. 14: ein Beispiel für die Ausbildung der Leiterbahnen, um die Schrägstellung auf einer Achse bestimmen zu können (eindimensionaler Sensor),
- Fig. 15: ein weiteres Beispiel für die Ausbildung der Leiterbahnen, um die Schrägstellung auf einer Achse bestimmen zu können (eindimensionaler Sensor),
- Fig. 16: einen zweidimensionalen Sensor mit einem scheibenförmigen Eingabeelement in Ansicht von oben,
- Fig. 17: einen zweidimensionalen Sensor mit einem scheibenförmigen Eingabeelement in Ansicht von unten,
- Fig. 18: eine zweidimensionale Leiterbahn-Anordnung,
- Fig. 19: eine weitere zweidimensionale Leiterbahn-Anordnung,
- Fig. 20: eine weitere zweidimensionale Leiterbahn-Anordnung,
- Fig. 21: ein Beispiel für eine Kontaktschließung eines zweidimensionalen Sensors,
- Fig. 22: ein weiteres Beispiel für eine Kontaktschließung eines zweidimensionalen Sensors,
- Fig. 23: eine Ausführung des erfindungsgemäß ausgebildeten Eingabeelementes,
- Fig. 24: eine Ausführung des erfindungsgemäß ausgebildeten Eingabeelementes,
- Fig. 25: eine Ausführung des erfindungsgemäß ausgebildeten Eingabeelementes,
- Fig. 26: eine Ausführung des erfindungsgemäß ausgebildeten Eingabeelementes,
- Fig. 27: eine Ausführung des erfindungsgemäß ausgebildeten Eingabeelementes,
- Fig. 28: einen tragbaren Computer mit einem berührungsempfindlichen Bildschirm
- Fig. 29: einen tragbaren Computer mit einem berührungsempfindlichen Bildschirm mit einem Aufsatz einer erfindungsgemäß ausgebildeten Einrichtung,
- Fig. 30: einen Aufsatz nach Fig. 29 in Schnittdarstellung,
- Fig. 31: ein Flußdiagramm des erfindungsgemäß gestalteten Verfahrens zur Auswertung eines Sensorsignals ,
- Fig. 32: eine Gegenüberstellung von verschiedenen Sensortechnologien.

Die erfindungsgemäß ausgebildete Einrichtung zur Erfassung und Verarbeitung von durch eine Betätigung von Eingabeelementen hervorgerufenen Eingabeimpulsen und Umwandlung eines digitalen Eingabesignals in Befehle zur Steuerung von elektronischen Endgeräten als Verbraucher besteht aus mindestens einem als Taste ausgebildeten und durch eine Fingerbewegung bedienbaren Eingabeelement 11. Dieses weist an seiner der Betätigungsoberfläche 10 abgewandten Unterseite 19 eine aus einem Material bestehende, Kalotte 12 auf, die auf einer Kontaktmatrix 15 zugewandten, konvex geformten Fläche mit einer elektrisch leitenden Kontaktbeschichtung 18 versehen ist und die Form einer Kugelkalotte aufweist, wobei das Eingabeelement 11 gegen die Kraft von mindestens einer Feder 13 in einem nicht dargestellten Gehäuse bewegbar angeordnet ist und unterhalb des Eingabeelementes 11 eine Basisplatte 14 vorgesehen ist, die mit einer Kontaktmatrix 15 versehen ist, die über eine Schnittstelle mit einer Abtasteinheit 16 zur Momentanwertanalyse der Eingabeimpulse und diese wiederum mit einer Mustererkennungseinheit 17 verbunden ist.

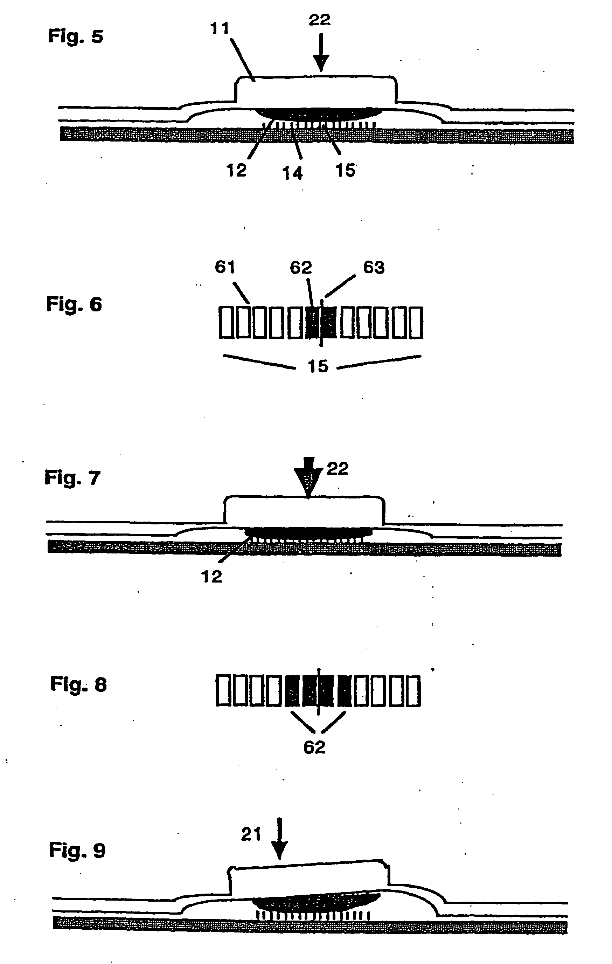

Das durch eine Fingerbewegung an der Betätigungsoberfläche 10 bedienbare Eingabeelement 11 läßt sich sowohl in senkrechter Bewegungsrichtung in einer Tastenmitte 22 wie ein Taster, als auch am linken Rand 21 oder am rechten Rand 23 betätigen. Hierdurch schließt die Kontaktbeschichtung 18 der Kalotte 12 je nach Stellung des Eingabeelementes 11 unterschiedliche Kontakte einer linienförmigen, d.h. alternierend in Reihe vorgesehenen Anordnung der Kontakte 142, 143, 144, 145 und 151 auf der Kontaktmatrix 15. Das Eingabeelement 11 kann bei der Betätigung nicht nur, wie zuvor beschrieben, in senkrechte Richtung betätigt werden, sondern auch bei einer Betätigungsrichtung in der Tastenmitte 22 in senkrechter Richtung auch bei Aufrechterhaltung des Tastendruckes in der Betätigungsrichtung in der Tastenmitte 22 das Eingabeelement 11 einer Abrollbewegung 24 sowohl in rechter als auch in linker Richtung unterwerfen. Hierdurch werden je nach dem Grad der Abrollung der Kalotte 12 auf der Kontaktmatrix 15 unterschiedliche Kontakte beaufschlagt, wobei wahlweise außerdem auch noch die Größe der aufgewendeten Druckkraft für die Kontaktbeaufschlagung von Bedeutung ist. Im Falle einer Beschaffenheit der Kalotte 12 aus einem verformbaren Material werden bei unterschiedlich starker Druckkraft bei einer Fingerbetätigung des Eingabeelementes 11 auch unterschiedlich viele Kontakte der Kontaktmatrix 15 gleichzeitig beaufschlagt, d.h. durch die Kontaktbeschichtung 18 der Kalotte 12 geschlossen. Das Eingabeelement ist jedoch auch mit einer Joystick-Bewegung 25 zu betätigen. Die Möglichkeiten der Kontaktschließungen nach den beschriebenen Betätigungsmöglichkeiten des Eingabeelementes 11 sind in den Fig. 5 bis 12 dargestellt, wobei ein stärkerer ausgeübter Betätigungsdruck auf das Eingabeelement 11 mit einem kräftiger ausgebildeten Pfeil symbolisiert dargestellt ist.

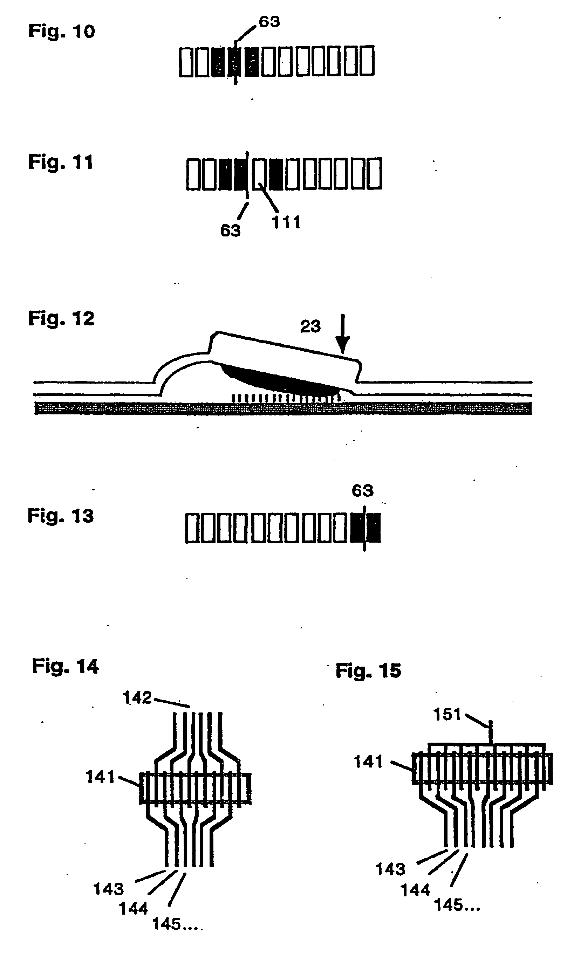

Die Kontaktmatrix 15 besteht, wie in den Fig. 14 und 15 dargestellt, aus einer Vielzahl von elektrischen Einzelkontakte 142, 143, 144, 145 und 151 in einer gereihten Kontaktanordnung, die auf einer als Platine ausgebildeten Basisplatte 14 aufgebracht sind. Zur Kontaktbetätigung dient die mit der Kontaktbeschichtung 18 versehene Kalotte 12, die alternativ aus einem verformbaren Material besteht, wodurch gesichert wird, daß druckabhängig eine Kontaktschließung von mehreren Kontakten gleichzeitig möglich wird. Die aus einem verformbaren, d.h. elastischen Material bestehende Kalotte 12 kann nach einem weiteren Merkmal der Erfindung an statt mit einer elektrisch leitenden Kontaktbeschichtung 18 versehen zu sein, auch aus einem elektrisch leitenden Material bestehen. Die Betätigungsoberfläche 10 des Eingabeelementes 11 kann jede mögliche geometrische Form einer Fläche annehmen. Es haben sich in der Praxis zwei Formen herausgebildet, die rechteckige und die kreisrunde Form der Betätigungsoberfläche 10. Entsprechend der gewählten Form der Betätigungsoberfläche 10 ist auch die Grundfläche der Kalotte 12 gestaltet. Außer einer gereihten linienförmigen Form der Kontaktanordnung in der Kontaktmatrix 15 ist nach einem weiteren Erfindungsmerkmal die Form der Kontaktmatrix 15 die der Betätigungsoberfläche 10 angepaßt. Hierdurch kann das Eingabeelement 11 wie ein Joystick oder wie ein Steuerknüppel in einer analogen Einrichtung zur Übertragung von dem Eingabeelement 11 aufgezwungenen Bewegungen eingesetzt werden.

Die Schaltkontakte der Kontaktmatrix 15 werden, wie von herkömmlichen Tastaturen bekannt, durch eine Abtasteinheit 16 abgetastet. Bei dem erfindungsgemäß gestalteten Sensor ist die Anzahl der Schaltkontakte allerdings erheblich höher. Je nach Schrägstellung des Eingabeelements 11 werden verschiedene Kontakte auf der Kontaktmatrix 15 geschlossen, da die konvex ausgebildete Unterseite 19 der Kalotte 12 des Eingabeelements 11 auf der Kontaktmatrix 15 abrollt.

Die Vielzahl der Schaltkontakte des Sensors führt zu mehrdeutigen Schaltzuständen, die von einer herkömmlichen Elektronik nicht ausgewertet werden können. Eine neuartige Mustererkennung, die mit dem erfindungsgemäßen Verfahren realisiert ist, interpretiert die Schaltzustände und ordnet ihnen eine Schrägstellungs-Position und die Richtung des Eingabeelements 11 zu sowie optional die ausgeübte Kraft.

Im einfachsten Fall besteht der Sensor aus nur zwei Schaltern, denen vier Schaltzustände zugeordnet werden können (aus, links, Mitte, rechts), wobei der Mitte-Zustand erreicht wird, indem beide Kontakte zugleich geschlossen werden. Wenn mehr Schalter vorhanden sind, kann eine erheblich höhere Auflösung und durch redundante Kontakte auch eine höhere Zuverlässigkeit erreicht werden.

Je nach Realisierung des Sensors kann die Bewegung bzw. Schrägstellung eines Eingabeelements 11 auf einer Achse oder auf zwei Achsen bestimmt werden. Dazu ist ein eindimensionales bzw. zweidimensionales Kontakt-Array erforderlich. Zusätzlich kann aus der Verformung einer weichen Kalotte 12 und der daraus resultierenden Anzahl geschlossener Kontakte auf die ausgeübte Kraft geschlossen werden. Das Eingabeelement 11 mit einer konvexen Kalotte 12 an der Unterseite 19 wird durch eine Federkraft 13 an der Seite des Eingabeelements 11 gegenüber einer Basisplatte 14 in einer Mittelposition gehalten. Wird das Eingabeelement 11 mit einem oder mehreren Fingern in Richtung der Basisplatte 14 gedrückt, dann sorgt die Kalotte 12 für elektrische Verbindungen an bestimmten Positionen der Kontaktmatrix 15. Dabei ist das Eingabeelement 11 nach unten und im Sinne einer Schrägstellung beweglich.

Die Erfindung kann in Zusammenhang mit einer grafischen Benutzeroberfläche vielseitig verwendet werden. Je nach Situation können verschiedene Anwendungen auf dem Display angeboten werden. Dadurch sind Parameter-Einstellungen, Menünavigation, Tasteneingabe und Mauszeigersteuerung mit derselben Hardware realisierbar.

Im Unterschied zu herkömmlichen Tasten wird also nicht nur zwischen dem Ruhezustand und einer Betätigung unterschieden, sondern die Details der Bedienung werden durch die Kontaktierung der Kontaktmatrix 15 so genau registriert, daß aus der Schrägstellung des Eingabeelements 11 auf die Position des oder der Finger auf dem Eingabeelement 11 geschlossen werden kann.

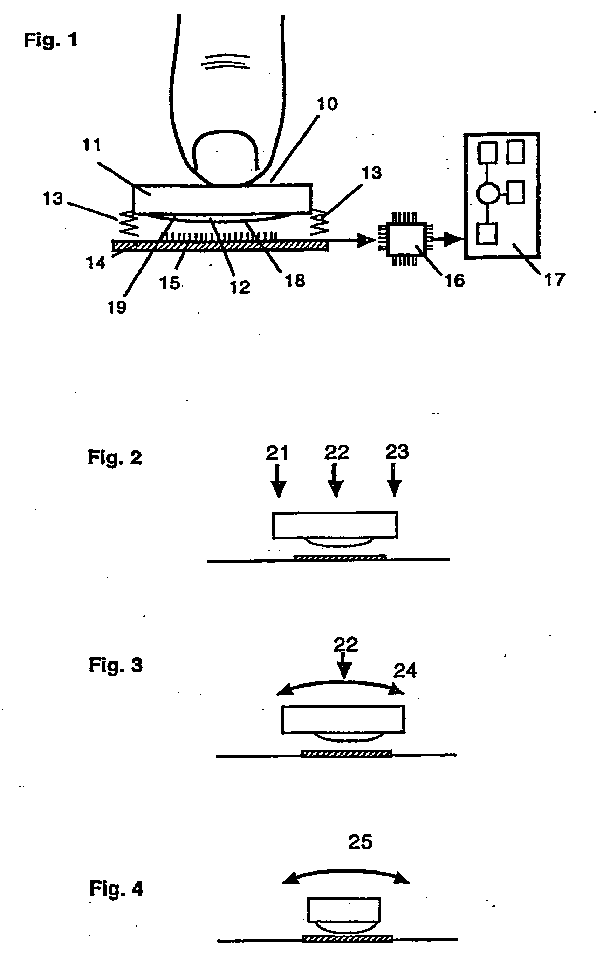

In Fig. 2 ist zu sehen, welche typischen Bedien-Aktivitäten die Schrägstellung eines flachen Eingabeelements 11 in der Art einer Taste bewirken. Der einfachste Fall ist der, daß das Eingabeelement 11 am linken Rand 21, in der Tastenmitte 22 oder am rechten Rand 23 betätigt wird, und zwar mit einem gewöhnlichen kurzen Druck auf das Eingabeelement 11. Von dieser Bedienaktion erhält die erfindungsgemäße Einrichtung nicht nur wie üblich das Signal für eine betätigte Taste, sondern zusätzlich noch, an welcher Stelle die Taste betätigt wurde. Auf diese Weise kann die Erfindung z.B. mehrere alternative Tastenbelegungen bei einem einzigen Tastendruck unterscheiden.

Fig. 3 zeigt den Fall, wenn eine Taste in der Tastenmitte 22 gedrückt und in Position gehalten wird. Auch im gedrückten Zustand ist es noch möglich mit dem Finger eine Manipulation des Eingabeelements 11 vorzunehmen, so daß sich der Winkel dieser Taste in Richtung 24 ändert. Von dieser Bedienaktion erhält die erfindungsgemäße Einrichtung nicht nur wie üblich das Signal für eine dauerhaft betätigte Taste, sondern zusätzlich noch eine laufende Information über die jeweilige Schrägstellung des Eingabeelements 11. Auf diese Weise kann die Erfindung z.B. einen Cursor aktivieren und steuern.

Fig 4 zeigt eine Anwendung, in der ein permanent aufliegendes Eingabeelement 11 wie z.B. ein Joystick bewegt werden kann. Das Element federt beim Loslassen zurück in die Mittelstellung.

In Fig. 5,7, 9 und 12 ist ein erfindungsgemäßesEingabeelement 11 in vier verschiedenen Zuständen im Schnitt zu sehen. In Fig. 6, 8, 10, 11 und 13 ist die zugehörige Kontaktmatrix als Muster abgebildet, das sich aus der jeweiligen Betätigung ergibt. Dabei sind offene Kontakte mit einem weißen Rechteck und geschlossene Kontakte mit einem schwarzen Rechteck symbolisiert.

Fig 5 zeigt ein Eingabeelement 11, das normal in der Mitte betätigt wurde. Das Kontaktmedium auf der Unterseite des Eingabeelements berührt die Leiter der Kontaktmatrix 15 entsprechend in der Mitte, was in Fig. 6 durch die beiden schwarzen Kästchen illustriert wird.

In Fig. 7 wurde das gleiche Eingabeelement 11 etwas kräftiger gedrückt. Jetzt verformt sich die weiche Unterseite des Eingabeelements, d.h. die Kalotte 12 (z.B. eine Pille aus elektrisch leitfähigem Gummi), wodurch mehrere Punkte der Kontaktmatrix 15 gleichzeitig elektrischen Kontakt erhalten und im Signal entsprechend vier Kästchen ausgelöst werden. Der Unterschied zwischen Fig. 5 und 7 bedeutet, daß die erfindungsgemäße Konstruktion die auf das Eingabeelement 11 ausgeübte Kraft messen kann; wenn auch nur indirekt über die Verformung des Kontaktmediums der Kalotte 12.

In Fig. 9 wurde das Eingabeelement 11 am linken Rand 21 desselben betätigt. Daraus könnte sich eine in Fig. 10 dargestellte Kontaktierung der Kontaktmatrix 15 einstellen und ein entsprechendes Signal ergeben. Allerdings ist es angesichts der großen Zahl von Kontakten in der Kontaktmatrix 15 möglich, daß einzelne Kontakte in Ausnahmefällen versagen, wie es Fig. 11 dargestellt ist. Auch in diesem Fall kommt das eingesetzte erfindungsgemäß ausgebildete Verfahren zur Erfassung und Verarbeitung von durch eine mechanische Betätigung von Eingabeelementen hervorgerufenen Eingabeimpulsen zu sinnvollen Ergebnissen. Die elektronische Steuerung in der Mustererkennungseinheit 17 ermittelt nämlich den Mittelpunkt der ausgelösten Kontakte im Sinne eines mathematischen Mittelwertes der Position. So ergibt sich auch hier ein Abbild der Schrägstellung des Eingabeelements 11.

In Fig. 12 wurde das Eingabeelement 11 am extremen rechten Rand 23 aktiviert, entsprechend sind die Kontakte 63 geschlossen und die Signale erscheinen am rechten Rand der Kontaktmatrix nach Fig. 13.

Mit dem erfindungsgemäßen Verfahren kann entweder die Schrägstellung des Eingabeelements entlang einer einzelnen Achse gemessen werden wie im Beispiel von Fig. 5 bis 13 gezeigt oder aber die Schrägstellung des Eingabeelementes 11 in einer beliebigen Richtung registriert werden. Das hängt nur ab von der konvexen Unterseite des Eingabeelements 11 (länglich oder rund) sowie von der Kontakt-Matrix 15 (streifenförmig oder eher quadratisch) ab.

Für die Messung in einer einzelnen Achse genügt eine Kontaktmatrix 15 in der Art von Fig. 14 oder 15. Die Unterseite des Eingabeelements 11 muß sich auf diese Kontakte legen, wenn mechanischer Druck in der Größenordnung von 20 bis 500 Gramm auf sie ausgeübt wird. Je nachdem, wie schräg das Eingabeelement 11 liegt, werden unterschiedliche Kontakte der Kontaktmatrix 15 geschlossen. In Fig. 14 und 15 ist die potenzielle Auflagefläche des vom Eingabeelement 11 bewegten Kalotte 12 als gerastertes Rechteck 141 angedeutet.

In Fig. 14 sind sechs mit Kontakten versehene Leiterbahnen von oben und sechs von unten herangeführt, die durch die Kalotte 12 miteinander verbunden werden können. Diese Kontaktmatrix 15 könnte daher ungefähr sechs Aktivierungswinkel unterscheiden (genau genommen sogar mehr, da durch die Verbindung mehrerer Kontakte gleichzeitig auch Zwischenstufen erkannt werden können). Die Kontaktmatrix 15 von Fig. 15 ermöglicht mit weniger Leiterbahnen sogar die Unterscheidung von rund acht Aktivierungswinkeln, da in Fig. 15 mehrere Leiterbahnen zusammengefaßt wurden.

Im einfachsten Fall könnte eine Kontaktmatrix 15 für ein erfindungsgemäß gestaltetes Verfahren zur Erfassung und Verarbeitung von Eingabeimpulsen mit drei Leiterbahnen auskommen: Linke Seite, rechte Seite und der elektrische Gegenpol. Daraus ergäben sich dann auch nur drei mögliche Aktivierungswinkel (nur linker Kontakt oder beide oder nur der rechte Kontakt). Das wäre eine sehr ungenaue Messung, die jedoch je nach Anwendung nützlich sein kann.

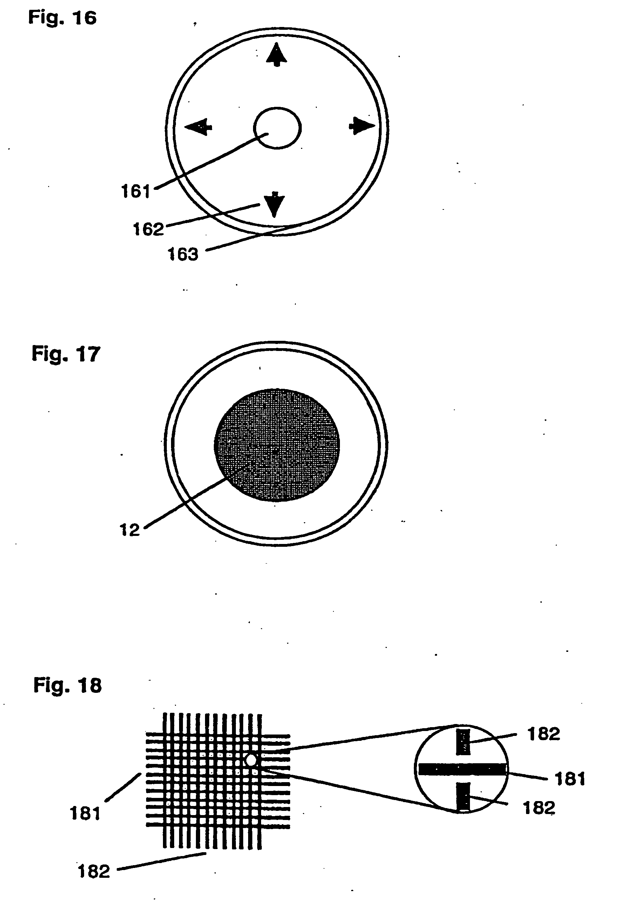

Fig. 16 zeigt ein Eingabeelement 11 in der Form einer Scheibe, das ausgehend von einer Grundstellung in der Mitte 161 durch einen Druck auf den Rand 162 in beliebige Richtungen betätigt werden kann. Fig. 16 zeigt die mögliche Oberseite eines solchen Eingabeelements 11, während Fig. 17 die Unterseite mit einer großen runden, konvexen Kalotte 12 in der Mitte zeigt.

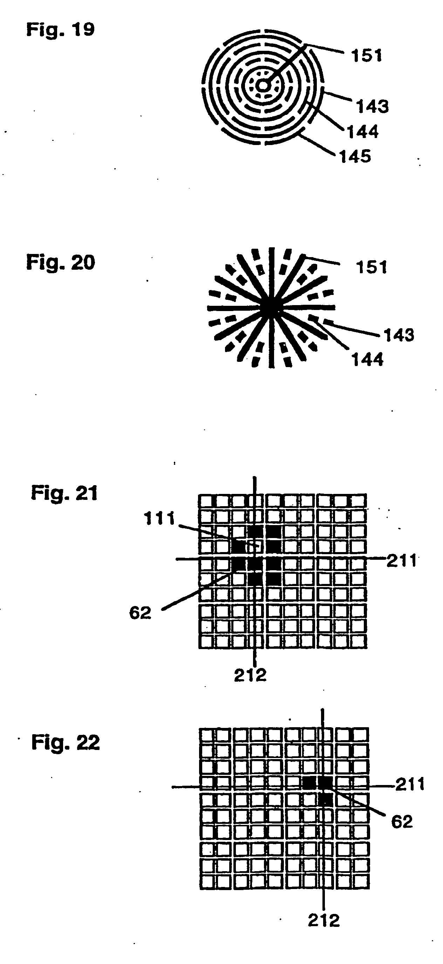

Diese Form der Kalotte 12 kann z.B. auf gitterartig angeordnete mit Kontakten versehene Leiterbahnen treffen, wie sie in Fig. 18 skizziert sind. Bei einer großen Anzahl von Kontaktpunkten müssen die Leiterbahnen in zwei elektrisch getrennten Ebenen verlegt werden. Die rechte Seite von Fig. 18 zeigt einen vergrößerten Ausschnitt von den Leiterbahnen, wobei die vertikal verlaufende Leiterbahn unterhalb und elektrisch getrennt von der horizontalen Leiterbahn verläuft. Fig. 19 und 20 zeigen weitere Beispiele für solche Leiterbahn-Layouts, wobei Fig. 20 mit einer einzelnen Ebene von Leiterbahnen auskommt.

Die in Fig. 1 gezeigte elektronische Abtasteinheit 16 stellt fest, welche Verbindungen geschlossen sind und erzeugt daraus ein Bitmuster, das alle möglichen Kontakte umfaßt. Die Abtastung der Leiterbahnen erfolgt so wie die Abfrage einer üblichen Computer-Tastatur. Der Reihe nach werden die verschiedenen Kontakt-Kombinationen mit Signalen versorgt und auf der anderen Seite läßt sich aus dem Pegel schließen, ob eine Verbindung in der jeweiligen Zeile/Spalte besteht.

Fig. 21 und 22 zeigen Beispiele solcher Bitmuster, die durch die Abtastung entstehen. In Fig. 21 ist das Ergebnis eines mittelstarken Andrucks ungefähr links oben zu sehen. Der einzelne helle Kontaktpunkt inmitten der schwarzen Punkte illustriert den möglichen Ausfall eines einzelnen Kontaktpunkts: Bei der großen Zahl an Kontaktpunkten und den möglichen schnellen Bewegungen des Steuerelements ist eine perfekte Kontaktierung unmöglich und auch gar nicht notwendig. Die in Fig. 1 dargestellte Mustererkennungseinheit 17 bildet automatisch den Mittelwert zwischen den registrierten Leiterbahn-Positionen. In Fig. 22 ist an der geringeren Zahl von Kontakten deutlich zu sehen, dass der Andruck auf das Steuerelement geringer ist als bei Fig. 21.

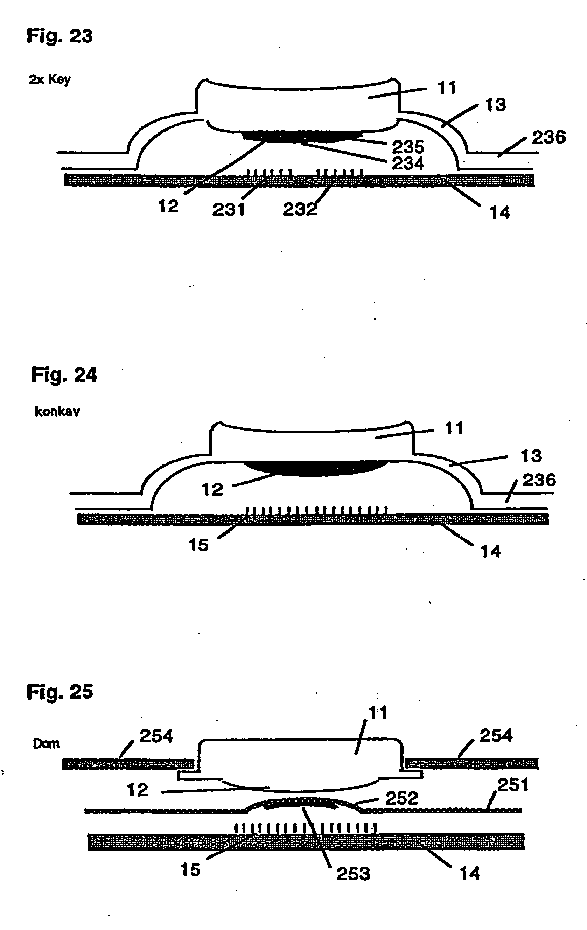

Das erfindungsgemäß ausgebildete Verfahren zur Erfassung und Verarbeitung von Eingabeimpulsen läßt sich an unterschiedliche Formen von Eingabeelementen anpassen, wie in Fig. 23 bis 27 gezeigt. Das Eingabeelement 11 ist elastisch so gelagert, daß es sich nach unten und etwas zur Seite drücken läßt, aber beim Loslassen immer in die gleiche Ruheposition zurückkehrt.

Das Eingabeelement 11 kann eine äußere Form erhalten, die den von Taschenrechnern, Mobiltelefonen usw. bekannten Tasten ähnelt (Fig. 23 und 24). Die als Kontaktmedium dienende Kalotte 12 (in der Skizze als schwarze Fläche dargestellt) hat jedoch eine spezielle Wölbung, die je nach Andruckwinkel einzelne oder mehrere Kontakte der Leiterbahnen schließt. Im einfachsten Fall (Fig. 23) sind nur zwei Kontakte zu schließen, die durch drei Leiterbahnen gebildet werden. Dadurch lassen sich außer dem Ruhezustand drei Andruckwinkel unterscheiden. Die Kalotte 12 ist entsprechend in der Mitte flach und am Rand abgeschrägt, um drei Stellungen mit spezifischem Andruckwinkel zu erlauben. Diese einfachste Ausprägung der Erfindung unterscheidet sich von bekannten Wipptasten dadurch, daß bei den erfindungsgemäß ausgebildeten Eingabeelementen 11 entweder der eine, der andere oder beide Kontakte geschlossen werden können (zwei Signale, drei Zustände), während bei den üblichen Wipptasten jeweils nur ein einziger Kontakt geschlossen wird (zwei Signale, zwei Zustände).

Außerdem ist bei der Erfindung kein oder nur ein einziger Druckpunkt fühlbar. Auch wenn bei einer sehr niedrigen Anzahl Leiterbahnen keine individuellen Druckpunkte von Tasten durch die Federung 13 in Fig. 1 spürbar sind, so können einige Kanten 234; 235 der Kalotte 12 bei einer Bewegung des Eingabeelements 11 gemäß Fig. 3 im gedrückten Zustand fühlbar sein.

Bei bekannten Wipptasten dagegen muss für jede Position ein entsprechender Druckpunkt vorhanden sein, weil sonst keine eindeutige Betätigung möglich ist. Dementsprechend ist der mechanische Aufbau der bekannten Wipptasten aufwendig, da die Übergänge zwischen den kombinierten Tasten eine unsichere Kontaktierung bedeuten. Bei der Erfindung hingegen sind die Übergänge und mehrfache Kontaktierungen kein Problem, sondern werden im Gegenteil dazu genutzt, um den Winkel des Eingabeelements 11 zu bestimmen.

Bei einem Eingabeelement 11 mit einer größeren Anzahl von Kontakten (Fig. 24) ist die Kalotte 12 abgerundet in der Form einer Kugel-Ausschnitts. Dabei sollte der Durchmesser der fiktiven Kugel ungefähr der Größe einer menschlicher Hand entsprechen, weil die Eingabeelemente 11 mit der Hand schräggestellt werden.

Eine Gruppe von Eingabeelementen 11 in Tastenform entsprechend Fig. 23 und 24 kann wie Tastaturen von üblichen elektronischen Geräten aus einer gemeinsamen Silikonmatte hergestellt werden, die die Oberseiten des Eingabeelementes 11, die Federung am Rand und die Befestigung in einem einzigen flexiblen Teil integriert.

Das ist kostengünstig in der Herstellung und ermöglicht die Kombination mit herkömmlichen Tasten. Das Kontaktmedium kann in Fig. 23 und 24 z.B. als Kohlenstoff-Kalotte bzw. aus elektrisch leitfähigem Kunststoff ausgebildet sein, diese Materialien sind bei Tastaturen bekannt und verbreitet.

Alternativ kann zwischen dem Eihgabeelement und den Leiterbahnen eine Polyester-Domfolie angebracht sein, die die Funktionen der Federung und mit einer leitfähigen Beschichtung auf der Unterseite aus Kohlenstoff, Metall o.ä. die Funktion des Kontaktmediums erfüllt (Fig. 25). Solche als Tastendome ausgebildete Eingabeelemente können auch stattdessen vollständig aus Metall gefertigt sein und sind für eine erfindungsgemäße Konstruktion nutzbar, wenn der Metalldom weich genug ist, um eine Kontaktierung entsprechend des Andruckwinkels zu gewährleisten.

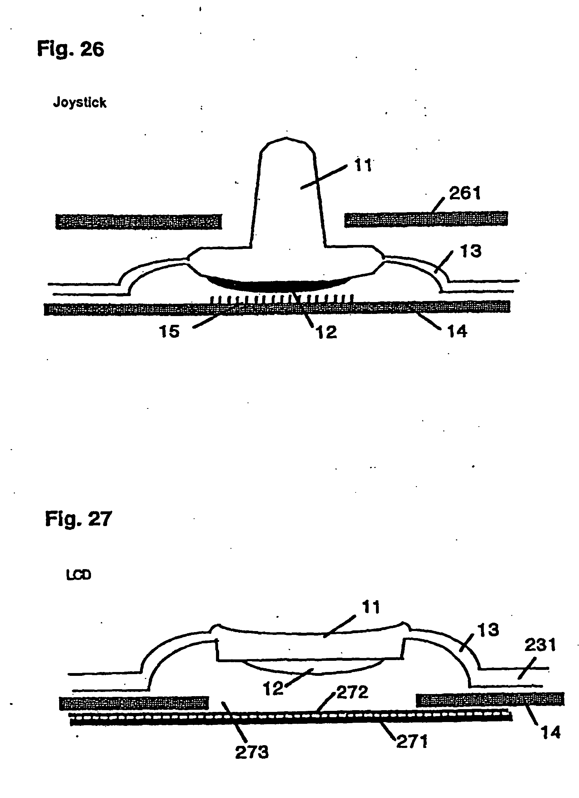

Ein Joystick auf der Grundlage derselben Materialien wie bei Fig. 23 und 24 ist in Fig. 26 dargestellt. Eine solche Bauform läßt sich preisgünstig herstellen und gut mit Tastaturen kombinieren.

Schließlich ist es noch möglich, ein Eingabeelement abnehmbar auf einem Touchscreen zu montieren wie in Fig. 27 gezeigt. Touchscreens haben die Eigenschaft, einen mechanischen punktförmigen Andruck auf einem Display zu registrieren. Das erfindungsgemäße Eingabeelement erzeugt genau solch einen punktförmigen Andruck, wobei die Berührungs-Position von dem Andruckwinkel abhängt. Die in grau dargestellte Basisplatte 14 deckt den Touchscreen ab und schützt ihn vor einem mechanischen Druck; bei definierten Aussparungen unter den Eingabeelementen kann das Eingabeelement jedoch den Touchscreen erreichen und je nach Winkel an wechselnden Koordinaten auslösen.

Als dauerhafte Montage ergäbe diese Kombination keinen Sinn, weil ein Touchscreen mit Display erheblich mehr kostet als ein als Kalotte ausgebildetes Kontaktmedium mit Leiterbahnen. Als zusätzliche Eingabemöglichkeit kann sie jedoch nützlich sein, etwa als auf einen Palm-Stiftcomputer steckbare Tastatur mit durch Schrägstellung variabler Belegung oder als optional auf einem Smartphone zu befestigender Joystick für Spielzwecke.

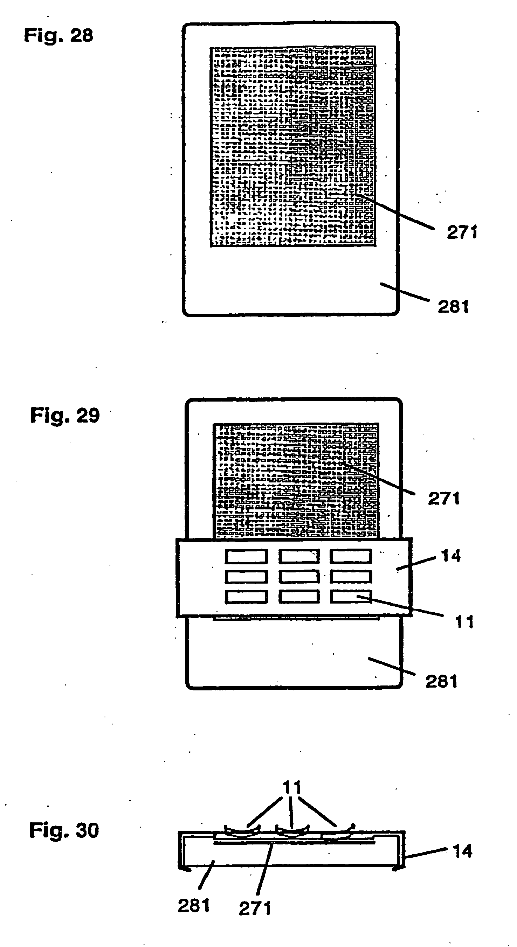

Palm-Computer und Smartphones verfügen über ein Gehäuse 281 (Fig. 28), in das ein großes berührempfindliches Display 271 als Bedienfläche (Fig. 28) integriert ist. Solch ein Touch-screen ist geeignet für die Bedienung einer grafischen Software mit dem Stift oder Finger direkt auf dem Display 271. Gleichzeitig ist solch ein Touchscreen weniger für Spiele geeignet (hier wäre ein Joystick nützlich) und ebenso wenig zur Dateneingabe (hier wären Tasten nützlich).

Die Erfindung ermöglicht es, ein solches mit Touchscreen ausgestattetes Gerät auf kleinstem Raum optional mit zusätzlichen Eingabeelementen 11 auszustatten. Dazu wird die Basisplatte 14 einer erfindungsgemäß gestalteten Einheit (Fig. 29) mit Eingabeelementen 11 (Fig. 29) von oben oder seitlich derart auf das Gehäuse 281 (Fig. 29) gesteckt, geklappt oder geklemmt, daß ein Teil (max. 50%) des Touchscreens, d.h. des Displays 271 (Fig. 29) verdeckt wird. Die restliche Fläche des Displays 271 steht weiterhin für die Software-Anzeige zur Verfügung.

Die Touchscreen-Fläche 271 wird unterhalb der Basisplatte 14 mechanisch von einzelnen Eingabeelementen 11 berührt, wenn diese betätigt werden (Fig. 30). Die Basisplatte 14 kann beispielsweise seitlich an das Gehäuse 281 geklemmt werden (Fig. 30).

Die elektrischen Kontakte, die durch die Betätigung des Eingabeelements 11 durch das Kontaktmedium, der Kalotte 12 an den Leiterbahnen geschlossen werden, werden durch das elektronische Bauelement als Abtasteinheit 16 der Reihe nach abgetastet. Bei dieser Abtastung handelt es sich um ein allgemein bekanntes Verfahren, das in praktisch jeder Tastatur eines elektronischen Geräts verwendet wird, so daß es hier nicht detailliert beschrieben zu werden braucht. Während bei den bekannten Geräten z.B. mit einer Kontaktmatrix von 8 x 8 Leiterbahnen eine Tastatur mit bis zu 64 Tasten abgefragt werden kann, wird eine entsprechende Kontaktmatrix bei der Erfindung für die Leiterbahnen eines einzelnen Eingabeelements 11 eingesetzt. Abgefragt werden die Kontakte wie bei Tastaturen üblich mit wechselnden Pulsen ungefähr 5 bis 50 mal pro Sekunde.

Als Ergebnis der Abtastung ergibt sich ein Bitmuster, das von der Abtasteinheit 16 an eine Mikroprozessorsteuerung mit Software, der Mustererkennungseinheit 17 zur Auswertung übermittelt wird (Fig. 1). Dabei wird nach jedem Abtastzyklus für jede Leiterbahn eine ja/nein-Information übertragen, die kennzeichnet, ob der jeweilige Kontakt geschlossen (also vom Kontaktmedium berührt) oder geöffnet ist. Aus diesem Bitmuster berechnet die Software die Position (entspr. dem Andruckwinkel) sowie ggf. die Andruckkraft der Aktivierung.

Die Anzahl der Leiterbahnen läßt sich je nach Anwendung variieren. Mehr Leiterbahnen ergeben eine höhere Genauigkeit der Winkelmessung, erfordern aber auch einen höheren Aufwand für die Elektronik. In der Praxis dürften zwischen drei und zwanzig Leiterbahnen bei einer Messung auf einer Achse (entspr. Fig. 14 und 15) sinnvoll sein und bei einer Messung in allen Richtungen (Fig. 16 bis 22) zwischen sechs und einigen hundert Kontaktpunkten.

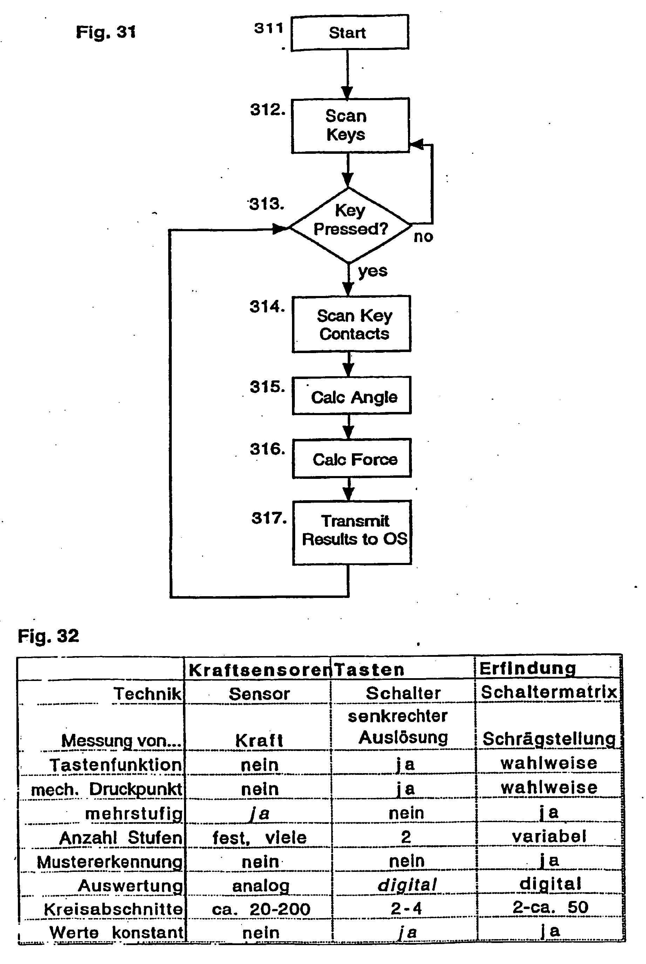

Detailliert sind die Schritte in Fig. 31 aufgelistet. Nach dem Start werden im Schritt 312 sämtliche Eingabeelemente auf Aktivierung überprüft. Es können wahlweise ein einzelnes Element verwendet oder es können mehrere Eingabeelemente kombiniert und von einer Elektronik ausgewertet werden. Der Schritt 312 stellt sicher, daß sich die nachfolgenden Berechnungen auf das aktivierte Element beziehen und wird wiederholt 313, bis eine Aktivierung festgestellt wird.

Anschließend werden die Leiterbahnen des aktivierten Elements untersucht 314. Aus dem Bitmuster der Kontaktierung ergeben sich Rückschlüsse auf den Betätigungswinkel, also der Schrägstellung des jeweiligen Elements 315, indem der Mittelwert der Positionen gebildet wird. Wenn beispielsweise zehn Leiterbahnen in einer Achse bei einem Eingabeelement 11 vorhanden sind und davon die Leiterbahnen 2, 3 und 5 Kontakt haben, dann wird Schritt 315 folgende Rechnung vollzogen: (2+3+5)/3 = gerundet 3,33. In der Regel werden die Leiterbahnen in jeweils gleichem Abstand angebracht, und die Kalotte 12 reagiert auf eine Winkeländerung mit einer proportionalen Verschiebung der Kontaktposition. In diesem Fall steht der Mittelwert der Kontaktpositionen in direktem Zusammenhang zum Schrägstellungswinkel. Für besondere Anwendungen können die Leiterbahnen auch ungleich angebracht sein oder das als Kalotte 12 ausgebildete Kontaktmedium kann besonders flach oder steil geformt sein. In diesen Fällen muß die Steuerung in Schritt 315 anhand einer Tabelle oder besonderen Berechnungsformel, die die mechanischen Eigenschaften wiederspiegelt, den Andruckwinkel bestimmen.

In Schritt 316 von Fig. 31 wird die Andruckkraft bestimmt, sofern dies für die Anwendung von Bedeutung ist. Dazu wird einfach die Anzahl der geschlossenen Kontakte (Leiterbahnen) gezählt. Ein stärkerer Andruck führt zu einer stärkeren Verformung des Kontaktmediums (Kalotte 12) und dadurch zu einer größeren Zahl von Kontakten.

Diese Kraftmessung ist ungenau und wird in den meisten Fällen nur rund 3-8 Stufen zuverlässig unterscheiden können. Die genauen Eigenschaften hängen von der Härte und der Form des Kontaktmediums (Kalotte) ab. Wenn eine höhere Präzision der Kraftmessung benötigt wird, läßt sich dies mit einer größeren Zahl von Leiterbahnen, einem weicheren Material des Kontaktmediums (Kalotte) und einer genaueren Berechnungsformel erreichen, die die besonderen mechanischen Eigenschaften des Kontaktmediums (Kalotte) berücksichtigt.

In Schritt 317 werden die Ergebnisse der Berechnung an das Betriebssystem (Operating System, OS) übergeben, wo sie zur Bedienung eines Cursors oder zur Spielsteuerung oder für Dateneingaben verwendet werden können. Bei einer dauerhaften Betätigung des Eingabeelements werden die Schritte 313 bis 317 wiederholt durchlaufen, d.h. es wird permanent eine möglicherweise veränderte Andruckposition oder -kraft ausgewertet.

Dae erfindungsgemäß gestaltete Verfahren stellt einen erheblich kompakteren Sensor dar, der als Potentiometer oder Kodierscheiben zur Messung der Schrägstellung von Eingabeelementen verwendet werden können. Daher kann es ebenso wie die bekannten Kraftsensoren und Wipptasten ohne weiteres in mobile elektronische Geräte integriert werden. Die unterschiedlichen Eigenschaften der bekannten Techniken im Vergleich zur Erfindung werden deutlich aus der Tabelle nach Fig. 32.

Kraftsensoren verwenden FSR (Force Sensing Resistors, druckabhängige Widerstände), Dehnungsmessstreifen (engl. Strain Gauge) oder Hall-Sensoren als Grundlage für Messungen. Die bekannten Tasten hingegen schließen einfach einen Stromkreis. Die Erfindung integriert eine Mehrzahl elektrischer Schalter in ein Eingabeelement, das mechanisch eine Einheit bildet.

Kraftsensoren werden z.B. für die Bedienung des Mauszeigers von Notebook-Computern eingesetzt, indem eine Art kleiner Joystick zwischen den Tasten untergebracht ist(Track Point). Ein Sensor unterhalb des Trackpoint mißt die Kraft, die eine Bedienperson seitlich auf ihn ausübt. Dabei ist ein mechanischer Druckpunkt, der ähnlich einer Tastenfunktion einer Aktivierung vorangeht, nicht vorgesehen. Allerdings gibt es TrackPoint-Versionen, die bei erhöhtem Druck nach einer Aktivierung eine einfache Maustasten-Funktion bieten. Die üblichen Tasten reagieren nur auf eine senkrechte Auslösung, d.h. auf einen Andruck nach unten. Die Erfindung dagegen registriert die Schrägstellung eines Eingabeelements in variablen Stufen und kann dabei die Funktion von zahlreichen Tasten in einem Eingabeelement vereinigen. Diese Tastenfunktion kann bei der Erfindung je nach Anwendung aber auch entfallen, womit die Erfindung ausschließlich zur Cursor-Steuerung verwendet werden kann. Ein mechanischer Druckpunkt wie bei üblichen Tasten ist bei der Erfindung möglich, kann aber auch weggelassen werden.

Mit Hilfe der Kraftsensoren kann ein Cursor mit einer variablen Geschwindigkeit bewegt werden. Das ist auch mit der Erfindung möglich, während übliche Tasten dies nicht bieten. Die Kraftsensoren leisten dies auf Grund der Unterscheidung zahlreicher Andruckstufen, wobei sich die Auflösung aus der Hardware des Sensors ergibt. Die üblichen Kraftsensoren, insbesondere Dehnungsmessstreifen, bieten eine hohe Auflösung von über hundert Stufen. Damit sind sie für die Bedienung eines Mauszeigers auf einem Notebook-Display geeignet. Bei kleineren elektronischen Geräten wirkt sich diese Präzision als Nachteil aus, weil sie nicht notwendig ist und die Kosten unnötig erhöht.

Tasten bieten keine variable Auslösung und sind damit für eine stufenlose Steuerung ungeeignet. Die Erfindung hingegen ist skalierbar in dem Sinne, daß je nach Anforderung eine größere oder kleinere Anzahl von Leiterbahnen eingesetzt werden kann. Das Eingabeelement selbst kann dabei unverändert bleiben.

Bei Kraftsensoren gibt es eine eindeutige Beziehung zwischen dem analogen Eingabesignal und dem Ergebnis der notwendigen Auswertungselektronik zur Analog-Digital-Wandlung. Bei Schaltern sind nur zwei Alternativen möglich, Stromkreis geschlossen oder offen. Die Erfindung hingegen wertet zwar digitale Signale der Leiterbahnen aus, erfordert jedoch ein Mustererkennungs-Verfahren, um aus einer Anzahl parallel betätigter Schalter eine Position und ggf. Andruckkraft zu berechnen.

Wenn die Auslenkung des Eingabeelements in zwei Achsen ausgewertet wird, kann aus dem analogen Signal mehrerer Kraftsensoren die Auslenkungsrichtung durch Interpolation berechnet werden. Ist z.B. ein Sensor in Nord-Richtung ebenso stark aktiviert wie ein Sensor in West-Richtung, dann kann auf eine Auslenkung des Steuerelements in Nordwest-Richtung geschlossen werden. Das ist eine bekannte Technik. Die Genauigkeit analoger Kraftsensoren ermöglicht hier eine Unterscheidung von über hundert Kreisabschnitten.

Herkömmliche Schalter können so viele Betätigungsrichtungen unterscheiden, wie Schalter vorhanden sind, d.h. in der Regel zwei oder vier. Dagegen unterscheidet die Erfindung hier je nach Anzahl der Leiterbahnen wesentlich mehr Kreisabschnitte, jedoch weniger als Kraftsensoren. Für kompakte elektronische Geräte ist das völlig ausreichend.

Kraftsensoren und die damit verbundene analoge Auswertungselektronik sind mehr oder weniger temperaturabhängig, auch durch Alterung der Komponenten, Produktionsschwankungen oder mangelhafte Kalibration können sich Ungenauigkeiten ergeben. Schalter und die Erfindung sind durch die volldigitale Technik von diesen Problemen überhaupt nicht betroffen.

Die erfindungsgemäße Lösung ist erheblich preisgünstiger, robuster und kompakter als herkömmliche Potentiometer und Kodierschalter. Die Erfindung geht weit über herkömmliche Tastenfunktionen hinaus und ist damit auch zweckmäßig für die Bedienung leistungsfähiger Software-Oberflächen mit vielen Funktionen. Die Auflösung der Messungen ist geringer als bei hochwertigen Kraftsensoren, andererseits ist durch die volldigitale Auswertung und den praktisch verschleißlosen Betrieb dennoch eine Genauigkeit gewährleistet, die mit Kraftsensoren vergleichbar ist.

Durch das digitale Interface und die automatisch als Teil innerhalb von Tastaturen herstellbare Bauform kann die Erfindung um eine Größenordnung günstiger als Kraftsensoren hergestellt werden. Der Aufwand und damit die Kosten liegen nur etwas höher als bei bekannten Tastaturen.

Durch die skalierbare Genauigkeit und die zahlreichen möglichen Bauformen kann die Erfindung an die verschiedensten Anforderungen angepaßt werden, insbesondere bietet sie sowohl Funktionen zur Cursorsteuerung als auch Funktionen zur Dateneingabe in der Art von Tastaturen.

Zur Messung der Schrägstellung von Bedienelementen für mobile elektronische Geräte werden Sensoren zur Cursorsteuerung und zur Bedienung der leistungsfähigen Software moderner Elektronikgeräte benötigt, wobei die Anforderungen an die Positionierung eines Cursors bei Mobilgeräten mit kleinen Displays geringer sind als bei großen Displays. Solche Sensoren müssen klein, leicht, robust und preisgünstig auf Automaten zu produzieren sein. Es ist von Vorteil, wenn die Sensoren aus möglichst wenig Teilen bestehen und sich in Tastaturen integrieren lassen. Durch die erfinderische Lösung werden diese Voraussetzungen erfüllt.

### Bezugszeichen-Aufstellung

| | |
|---|---|
| 10 | Bedienoberfläche |
| 11 | Eingabeelement |
| 12 | Kalotte |
| 13 | Federung |
| 14 | Basisplatte |
| 15 | Kontaktmatrix |
| 16 | Abtasteinheit |
| 17 | Mustererkennungseinheit |
| 18 | Kontaktbeschichtung |
| 19 | Unterseite |
| 21 | linker Rand |
| 22 | Mitte |
| 23 | rechter Rand |
| 24 | Taste mit Bedienfunktion Drücken und Halten |
| 25 | Joystick-Bewegung |
| | |
| 62 | geschlossener Kontakt |
| 63 | geschlossener Kontakt |
| 111 | offener Kontakt |
| 141 | gerastetes Rechteck |
| 142 | Kontakt |
| 143 | Kontakt |
| 144 | Kontakt |
| 145 | Kontakt |
| 151 | Kontakt |
| 161 | Mitte |
| 162 | Rand |
| 181 | Leiterbahn |
| 182 | Leiterbahn |
| 211 | Mittelwert |
| 212 | Mittelwert |
| 231 | Gehäuse |
| 232 | Kontakt |
| 234 | Kante |
| 235 | Kante |
| 236 | Gehäuse |
| 251 | federnder Folie |
| 252 | konvexe Wölbuing |
| 253 | elektrisch leitende Schicht |
| 254 | Gehäuse |
| 261 | Gehäuse |
| 271 | Display |
| 273 | Aussparung |
| 281 | Gehäuse |
| 311 | Verfahrens-Schritt |
| 312 | Verfahrens-Schritt |
| 313 | Verfahrens-Schritt |
| 314 | Verfahrens-Schritt |
| 315 | Verfahrens-Schritt |

## Patentansprüche

1. Einrichtung bestehend aus einem Eingabeelement (11), das in einer Ebene federnd aufgehängt angeordnet ist und aus dieser heraus sowohl in senkrechter Richtung als auch in einer schrägen Richtung unter einem bestimmten Winkel zur Senkrechten betätigbar ist, aus einem Schalterelement (18; 15), das auf der Basis einer mit Schaltkontakten versehenen Matrix (15) arbeitet und aus einer Steuerelektronik (16; 17), zur Erfassung einer mechanischen Betätigung des Eingabeelementes (11), wobei das Schalterelement (18, 15) die dem Eingabeelements (11) aufgezwungenen Bewegungsabläufe in elektrische, digitale Signale umwandelt und die Steuerelektronik (16, 17) auf der Basis einer Mustererkennung arbeitend die von dem Schalterelement (18; 15) bereitgestellten elektrischen Signale in Befehle für nachfolgende Verbraucher umsetzt, **dadurch gekennzeichnet, dass** eine Abtasteinheit (16) die Reihen und Spalten einer Kontaktmatrix (15) in schneller Abfolge ca. 50x pro Sekunde nacheinander auf eine elektrische Verbindung überprüft, und eine beliebige Kombination von Kontakten der Kontaktmatrix (15) geschlossen sein kann, und die Abtasteinheit (16) aus dieser Überprüfung ein Bitmuster mit allen mögliche kontake generiert und zur weiteren Verarbeitung an eine Mustererkennungseinheit (17) weiterleitet, die das Bitmuster derart interpretiert, daß aus der räumlichen Position (63) der geschlossenen Kontakte (62) ein arithmetischer Mittelwert gebildet wird und aus diesem Ergebnis die Schrägstellung des Eingabeelements (11) entlang einer Achse ermittelt wird.

2. Einrichtung nach Anspruch 1, **dadurch *gekennzeichnet,* daß** das Schalterelement aus einer unterhalb des Eingabeelementes (11) angeordneten Basisplatte (14) besteht, die eine Kontaktmatrix (15) aufweist, die mit Kontakten (142; 143; 144; 145; 151) versehen ist und das Eingabeelement (11) an seiner Unterseite (19) eine Kalotte (12) aufweist, die auf den der Unterseite (19) abgewandten Oberflächen mit einer konvexen Form eine elektrisch leitende Kontaktbeschichtung (18) aufweist.

3. Einrichtung nach Anspruch 2, ***dadurch gekennzeichnet,* daß** die Kalotte (12) aus einem verformbaren Material, vorwiegend aus einem Elastomer besteht.

4. Einrichtung nach Anspruch 2 und 3, ***dadurch gekennzeichnet,* daß** die Kalotte (12) in der Mitte einen flachen Bereich mit einer parallel zur Unterseite (19) des Eingabeelementes (11) sich erstreckenden Oberfläche und am Rand eine Abschrägung aufweist.

5. Einrichtung nach Anspruch 1 bis 4, ***dadurch gekennzeichnet,* daß** die Kontaktmatrix (15) eine Vielzahl von Kontakten (142; 143; 144; 145; 151) entlang einer Achse aufweist.

6. Einrichtung nach Anspruch 1 bis 5, ***dadurch gekennzeichnet,* daß** die Kontaktmatrix (15) eine zweidimensionale Kontaktbelegung aufweist.

7. Einrichtung nach Anspruch 3 bis 6, ***dadurch gekennzeichnet,* daß** die Kalotte (12) im Schnitt einer polygonen Grundfläche mit höchstens zehn Kanten (234; 235), die der Unterseite (19) des Eingabeelementes (11) entspricht, aufweist.

8. Einrichtung nach Anspruch 8 bis 6, ***dadurch gekennzeichnet,* daß** die Kalotte (12) eine kreisförmige Grundfläche aufweist.

9. Einrichtung nach Anspruch 1 bis 8, ***dadurch gekennzeichnet,* daß** die Kontakte (142; 143; 144; 145; 151) der Kontaktmatrix (15) paarweise in einer alternierenden Reihenfolge angeordnet sind.

10. Einrichtung nach Anspruch 1 bis 8, ***dadurch gekennzeichnet,* daß** die Kontakte (142; 143; 144; 145; 151) der Kontaktmatrix (15) koaxial zu einander in einer alternierenden Reihenfolge angeordnet sind.

11. Einrichtung nach Anspruch 1 bis 8, ***dadurch gekennzeichnet,* daß** die Kontakte (142; 143; 144; 145; 151) der Kontaktmatrix (15) in einer sich kreuzenden Reihenfolge angeordnet sind.

12. Einrichtung nach Anspruch 2 bis 8, ***dadurch gekennzeichnet,* daß** unterhalb des Eingabeelementes (11) zwischen der Kalotte (12) und Kontaktmatrix (15) eine durch eine vorgesehene konvexe Wölbung (252) der Folie (251) in Richtung des Eingabeelementes (11) federnde Folie (251) vorgesehen ist, die an der Unterseite im Bereich der Kontaktmatrix (15) mit einer elektrisch leitenden Schicht (253) versehen ist.

13. Einrichtung nach Anspruch 2 bis 8, ***dadurch gekennzeichnet,* daß** das Eingabeelement (11) als Joystick ausgebildet ist und unterhalb einer Gehäuseabdeckung (261) federnd gelagert ist, wobei die Kalotte (12) konvex ausgebildet ist.

14. Einrichtung nach Anspruch 2 bis 8, ***dadurch gekennzeichnet,* daß** das Eingabeelement (11) federnd gegenüber der Basisplatte (14) im Gehäuse (231) gelagert ist und dieses fest mit der Basisplatte (14) verbunden ist, wobei die Basisplatte (14) eine Aussparung (273) aufweist, durch die die Kalotte (12) einen Touchscreen (272) betätigt.

15. Einrichtung nach Anspruch 1 bis 8 und 14, ***dadurch gekennzeichnet,* daß** das Eingabeelement (11) und das federnde Eigenschaften aufweisende Gehäuse (231) eine Baueinheit bilden.

16. Einrichtung nach Anspruch 2 bis 8, ***dadurch gekennzeichnet,* daß** die Basisplatte(14) mit einem Softwaregesteuerten, eine fühlbare Rückmeldung des Betätigungszustandes des Eingabeelementes (11) vermittelnden Elektromagneten versehen ist.

17. Einrichtung nach Anspruch 2 bis 8, ***dadurch gekennzeichnet,* daß** unterhalb des Eingabeelementes 11, d.h. auf der Basisplatte (14) ein integrierter Schaltkreis vorgesehen ist, der auf seiner Oberseite mit einer Vielzahl von, die Funktion von Kontakten übernehmenden Elektroden versehen ist, wobei der integrierte Schaltkreis über zwei Stromversorgungsanschlüsse, eine Eingangsdatenleitung zur Konfiguration und drei Daten-Ausgängen für die Werte x, y und z der entsprechenden räumlichen Achsen verfügt.

18. Einrichtung nach Anspruch 2 bis 8 und 15, ***dadurch gekennzeichnet,* daß** die Basisplatte (14) in einer ohne Werkzeug lösbaren Verbindung klappbar oder steckbar auf einem Display (271) mit einem integrierten Touchscreen (272) aufliegt, so daß die konvexe Kalotte (12) beim Betätigen des Eingabeelementes (11) durch eine Aussparung (273) in der Basisplatte (14) den Touchscreen (272) derart betätigt, daß der Touchscreen (272) aufgrund der mechanischen Auslösung durch die Kalotte (12) an einem je nach Betätigungswinkel des Eingabeelements (11) unterschiedlichen Punkt auf der Fläche des Touchscreen eine spezifische Position registriert und diese Position zur Weiterverarbeitung weiterleitet, worauf je nach Position eine unterschiedliche Anzeige auf dem Display (271) erfolgt.

19. Verfahren für eine Einrichtung nach Anspruch 1 bis 18, ***dadurch gekennzeichnet,* daß** eine Abtasteinheit (16) die Reihen und Spalten einer Kontaktmatrix (15) in schneller Abfolge ca. 50x pro Sekunde nacheinander auf eine elektrische Verbindung überprüft, wobei eine beliebige Kombination von Kontakten der Kontaktmatrix (15) geschlossen sein kann, und die Abtasteinheit (16) aus dieser Überprüfung ein Bitmuster generiert und zur weiteren Verarbeitung an eine Mustererkennungseinheit (17) weiterleitet, wobei eine Mustererkennungseinheit (17) ein von einer Abtasteinheit (16) geliefertes Bitmuster, deren Bits geschlossene Kontakte (62) einer Kontaktmatrix (15) repräsentieren, derart interpretiert, daß aus der räumlichen Position (63) der geschlossenen Kontakte (62) ein arithmetischer Mittelwert gebildet wird und aus diesem Ergebnis die Schrägstellung des Eingabeelements (11) entlang einer Achse ermittelt wird.

20. Verfahren für eine Einrichtung nach Anspruch 19 ***dadurch gekennzeichnet,* daß** die Mustererkennungseinheit (17) ein von einer Abtasteinheit (16) geliefertes Bitmuster, deren Bits geschlossene Kontakte einer Kontakt-matrix (15) repräsentieren, derart interpretiert, daß aus der Anzahl der geschlossenen Kontakte eine Summe gebildet wird und aus diesem Ergebnis die Abflachung einer Kalotte (12) bei der Betätigung des Eingabeelements (11) ermittelt wird, woraus sich der Anpressdruck eines Eingabeelements (11) ermitteln läßt.

21. Verfahren für eine Einrichtung nach Anspruch 19 und 20 ***dadurch gekennzeichnet,* daß** die Mustererkennungseinheit (17) ein von einer Abtasteinheit (16) geliefertes Bitmuster, deren Bits geschlossene Kontakte (62) einer Kontaktmatrix (15) repräsentieren, derart interpretiert, daß aus der räumlichen Position der geschlossenen Kontakte (62) zwei arithmetische Mittelwerte (211; 212) gebildet werden und aus diesem Ergebnis die Schrägstellung eines Eingabeelements (11) entlang zweier Achsen ermittelt wird.

22. Verfahren nach Anspruch 19 bis 21, ***dadurch gekennzeichnet*, daß** die Kalotte (12) eines runden Eingabeelements (11) eine Vielzahl von Kontakten auf der Kontaktmatrix (15) schließt, die in einer zweidimensionalen Kontaktmatrix angeordnet sind, wobei die Steuerung aus der Position der geschlossenen Kontakte den Betätigungswinkel und die Betätigungsrichtung ermittelt wird.

23. Verfahren nach Anspruch 19 bis 22 ***dadurch gekennzeichnet,* daß** die Kalotte (12) des Eingabeelementes (11) bis zu zwei Kontakte auf der Kontaktmatrix (15) schließt, wobei eine seitliche Auslösung einen einzelnen Kontakt schließt und eine mittige Auslösung zwei Kontakte schließt.

24. Verfahren nach Anspruch 19 bis 23, ***dadurch gekennzeichnet,* daß** zur Messung der Aktivierung von Eingabeelement (11) elektronischer Geräte, das Eingabeelementen (11) in der Form einer Taste oder eines Joysticks gegen eine Federkraft durch eine Bedienperson in mehrere Richtungen schräggestellt werden kann, worauf eine elektrisch leitende, gewölbte Fläche an der Unterseite (19) des Eingabeelements (11) eine Kontakt-matrix (15) an wechselnden Positionen berührt und dadurch einen oder mehrere elektrische Kontakte schließt, die von einer Steuerelektronik bestehend aus Abtasteinheit (16) und Mustererkennungseinheit (17) ausgewertet werden, wobei aus der Position der geschlossenen Kontakte der Winkel und die Richtung der Betätigung des Eingabeelements (11) ermittelt wird.

25. Verfahren nach Anspruch 19 bis 24, ***dadurch gekennzeichnet*, daß** aus der Anzahl geschlossener Kontakte die ausgeübte Andruckkraft ermittelt wird, wobei die Anzahl geschlossener Kontakte durch eine Abflachung des Kontaktmediums Kalotte (12) auf der Kontaktmatrix (15) infolge einer ausgeübten Kraft auf das Eingabeelement (11) hervorgerufen wird.

## Claims

1. Device consisting of an input element (11), which is arranged elastically suspended in a plane and can be activated out of this plane both in vertical direction and in an oblique direction under a certain angle to the vertical, a switch element (18; 15) which functions on the basis of a matrix (15) provided with switching contacts, and control electronics (16; 17) for recording a mechanical activation of the input element (11), wherein the switch element (18; 15) converts the motion sequences forced upon the input element (11) into electrical, digital signals and the control electronics (16; 17), working on the basis of a pattern recognition, translates the electrical signals provided by the switch element (18; 15) into commands for subsequent consumers,
**characterised in that** a scanning unit (16) checks the rows and columns of a contact matrix (15) for an electrical connection in rapid succession at a rate of approx. 50 times per second, and a random combination of contacts of the contact matrix (15) may be closed, and the scanning unit (16), based on this check, generates a bit pattern with all possible contacts and forwards this for further processing to a pattern recognition unit (17), which interprets the bit pattern such that an arithmetic mean value is formed from the spatial position (63) of the closed contacts (62) and the oblique position of the input element (11) is ascertained along one axis based on this result.

2. The device according to claim 1, **characterised in that** the switch element consists of a base plate (14) arranged below the input element (11), which comprises a contact matrix (15) equipped with contacts (142; 143; 144; 145; 151), and the input element (11) on its underside (19) comprises a calotte (12) which comprises an electrically conducting, convexly shaped contact coating (18) on the surfaces facing away from the underside (19).

3. The device according to claim 2, **characterised in that** the calotte (12) consists of a deformable material, primarily of an elastomer.

4. The device according to claims 2 and 3 **characterised in that** the calotte (12) comprises a flat area in the middle with a surface extending parallel to the underside (19) of the input element (11), and a chamfer on its rim.

5. The device according to claims 1 to 4, **characterised in that** the contact matrix (15) comprises a plurality of contacts (142; 143; 144; 145; 151) along one axis.

6. The device according to claims 1 to 5, **characterised in that** the contact matrix (15) comprises a two-dimensional contact assignment.

7. The device according to claims 2 to 6, **characterised in that** the calotte (12) comprises a base area which is polygonal in section with at most ten edges (234; 235) and matches the underside (19) of the input element (11).

8. The device according to claims 2 to 6, **characterised in that** the calotte (12) comprises a circular base area.

9. The device according to claims 1 to 8, **characterised in that** the contacts (142; 143; 144; 145; 151) of the contact matrix (15) are arranged in pairs in an alternating sequence.

10. The device according to claims 1 to 8, **characterised in that** the contacts (142; 143; 144; 145; 151) of the contact matrix (15) are arranged coaxially in an alternating sequence.

11. The device according to claims 1 to 8, **characterised in that** the contacts (142; 143; 144; 145; 151) of the contact matrix (15) are arranged in a sequence crossing itself.

12. The device according to claims 2 to 8, **characterised in that** below the input element (11) between the calotte (12) and the contact matrix (15), a foil (251) is provided which is springy in direction of the input element (11) due to a convex arching (252) of the foil (251), and which, on the underside in the area of the contact matrix (15), is provided with an electrically conducting layer (253).

13. The device according to claims 2 to 8, **characterised in that** the input element (11) is configured as a joystick and springily mounted below the housing cover (261), wherein the calotte (12) is shaped convexly.

14. The device according to claims 2 to 8, **characterised in that** the input element (11) is springily mounted relative to the base plate (14) in the housing (231) and the housing is firmly connected with the base plate (14), wherein the base plate (14) comprises a recess (273) through which the calotte (12) activates a touch-screen (272).

15. The device according to claims 1 to 8 and claim 14, **characterised in that** the input element (11) and the housing (231) having elastic properties form a constructional unit.

16. The device according to claims 2 to 8, **characterised in that** the base plate (14) is provided with a software-controlled electro-magnet conveying a tangible feedback of the activation state of the input element (11).

17. The device according to claims 2 to 8, **characterised in that** an integrated circuit is provided below the input element (11), i.e. on the base plate (14), which circuit is provided on its top with a plurality of electrodes performing the function of contacts, wherein the integrated circuit comprises two power supply connections, an input data line for configuration and three data outputs for the values x, y and z of the corresponding spatial axes.

18. The device according to claims 2 to 8 and claim 15, **characterised in that** the base plate (14), in a detachable, foldable or pluggable connection without a tool, rests on a display (271) with an integrated touch-screen (272) resulting in the convex calotte (12), when activated by the input element (11) through a recess (273) in the base plate (14), activating the touch-screen (272) in such a way that the touch-screen (272), due to being mechanically triggered by the calotte (12) at different points on the surface of the touch-screen depending on the angle of activation of the input element (11), registers a specific position and forwards this position for further processing, whereupon, depending on the position, the reading on the display (271) is different.

19. A method for a device according to claims 1 to 18, **characterised in that** a scanning unit (16) checks the rows and columns of a contact matrix (15) in rapid succession at a rate of approx. 50 times per second for an electrical connection, wherein a random combination of contacts of the contact matrix (15) may be closed, and the scanning unit (16) generates a bit pattern with all possible contacts and forwards this for further processing to a pattern recognition unit (17), wherein the pattern recognition unit (17) interprets a bit pattern supplied by a scanning unit (16) - the bits representing closed contacts (62) of a contact matrix (15) - such that an arithmetic mean value is formed from the spatial position (63) of the closed contacts (62), and the result is used to ascertain the oblique position of the input element (11) along one axis.

20. The method for a device according to claim 19, **characterised in that** the pattern recognition unit (17) interprets a bit pattern supplied by a scanning unit (16) - the bits representing closed contacts of a contact matrix (15) - such that a sum is formed from the number of closed contacts and the result is used to ascertain the flattening of a calotte (12) during activation of the input element (11), wherefrom the contact pressure of an input element (11) can be ascertained.

21. The method for a device according to claims 19 and 20, **characterised in that** the pattern recognition unit (17) interprets a bit pattern supplied by a scanning unit (16) - the bits representing closed contacts (62) of a contact matrix (15) - in such a way that two arithmetic mean values (211; 212) are formed from the spatial position of the closed contacts (62), and the oblique position of the input element (11) along two axes is ascertained from this result.

22. The method for a device according to claims 19 to 21, **characterised in that** the calotte (12) of a round input element (11) closes a plurality of contacts on the contact matrix (15), which are arranged in a two-dimensional contact matrix, wherein the control ascertains the angle of activation and the direction of activation from the position of the closed contacts.

23. The method for a device according to claims 19 to 22, **characterised in that** the calotte (12) of the input element (11) closes up to two contacts on the contact matrix (15), wherein a lateral triggering closes a single contact and a central triggering closes two contacts.

24. The method for a device according to claims 19 to 23, **characterised in that** for measuring the activation of the input element (11) with the aid of electronic devices, the input element (11), in the form of a button or a joystick, can be placed against a springloaded force into an oblique position in several directions by an operator, whereupon an electrically conducting arched surface on the underside (19) of the input element (11) touches a contact matrix (15) at changing positions and thereby closes one or several electrical contacts, which are evaluated by a control electronics consisting of a scanning unit (16) and a pattern recognition unit (17), wherein the angle and the direction of activation of the input element (11) are ascertained from the position of the closed contacts.

25. The method for a device according to claims 19 to 24, **characterised in that** the applied contact force is ascertained from the number of closed contacts, wherein the number of closed contacts results from a flattening of the contact medium, i.e. the calotte (12) on the contact matrix (15) due to an applied force upon the input element (11).

## Revendications

1. Dispositif se composant d'un élément d'entrée (11) qui est disposé de manière suspendue par ressort dans un plan et peut être actionné hors de celui-ci tant en direction verticale qu'également dans une direction inclinée à un certain angle par rapport à la verticale, d'un élément de commutation (18 ; 15) qui travaille sur la base d'une matrice (15) munie de contacts de commutation et d'un dispositif de commande électronique (16 ; 17) pour détecter un actionnement mécanique de l'élément d'entrée (11), l'élément de commutation (18, 15) convertissant les séquences de mouvements imposées à l'élément d'entrée (11) en signaux électriques numériques, et le dispositif de commande électronique (16, 17) convertissant les signaux électriques mis à disposition par l'élément de commutation (18 ; 15), en travaillant sur la base d'une reconnaissance de motifs, en instructions pour des consommateurs subséquents,
**caractérisé en ce qu'**une unité d'exploration (16) vérifie les lignes et colonnes d'une matrice de contacts (15) à un rythme rapide d'environ 50x par seconde les unes après les autres concernant une connexion électrique, et **en ce qu'**une combinaison au choix de contacts de la matrice de contacts (15) peut être fermée, et l'unité d'exploration (16) générant à partir de cette vérification un motif de bits avec tous les contacts possibles et le retransmettant à une unité de reconnaissance de motifs (17) pour la suite du traitement, laquelle unité interprète le motif de bits de manière telle, qu'une valeur moyenne arithmétique est réalisée à partir de la position dans l'espace (63) des contacts (62) fermés et qu'à partir de ce résultat, on détermine la position inclinée de l'élément d'entrée (11) le long d'un axe.

2. Dispositif selon la revendication 1, **caractérisé en ce que** l'élément de commutation se compose d'une plaque de base (14) disposée en-dessous de l'élément d'entrée (11), laquelle présente une matrice de contacts (15) qui est garnie de contacts (142 ; 143 ; 144 ; 145 ; 151), et **en ce que** l'élément d'entrée (11) présente sur son côté inférieur (19) une calotte (12), laquelle présente sur les surfaces avec une forme convexe tournant le dos au côté inférieur (19) un revêtement de contact électroconducteur (18).

3. Dispositif selon la revendication 2, **caractérisé en ce que** la calotte (12) se compose d'un matériau déformable, essentiellement en un élastomère.

4. Dispositif selon les revendications 2 et 3, **caractérisé en ce que** la calotte (12) présente, au milieu, une zone plate avec une surface s'étendant parallèlement au côté inférieur (19) de l'élément d'entrée (11), et un chanfreinage sur le bord.

5. Dispositif selon les revendications 1 à 4, **caractérisé en ce que** la matrice de contacts (15) présente une pluralité de contacts (142 ; 143 ; 144 ; 145 ; 151) le long d'un axe.

6. Dispositif selon les revendications 1 à 5, **caractérisé en ce que** la matrice de contacts (15) présente une garniture de contacts en deux dimensions.

7. Dispositif selon les revendications 2 à 6, **caractérisé en ce que** la calotte (12) présente, en coupe transversale, une surface de base polygonale avec dix angles au maximum (234 ; 235), laquelle correspond au côté inférieur (19) de l'élément d'entrée (11).

8. Dispositif selon les revendications 2 à 6, **caractérisé en ce que** la calotte (12) présente une surface de base circulaire.

9. Dispositif selon les revendications 1 à 8, **caractérisé en ce que** les contacts (142 ; 143 ; 144 ; 145 ; 151) de la matrice de contacts (15) sont disposés par paires dans un ordre alterné.

10. Dispositif selon les revendications 1 à 8, **caractérisé en ce que** les contacts (142 ; 143 ; 144 ; 145 ; 151) de la matrice de contacts (15) sont disposés coaxialement les uns par rapport aux autres dans un ordre alterné.

11. Dispositif selon les revendications 1 à 8, **caractérisé en ce que** les contacts (142 ; 143 ; 144 ; 145 ; 151) de la matrice de contacts (15) sont disposés dans un ordre croisé.

12. Dispositif selon les revendications 2 à 8, **caractérisé en ce que** l'on prévoit en-dessous de l'élément d'entrée (11) entre la calotte (12) et la matrice de contacts (15) un film élastique (251) en direction de l'élément d'entrée (11) grâce à un bombement (252) convexe du film (251) prévu, lequel est garni d'une couche électroconductrice (253) sur le côté inférieur dans la zone de la matrice de contacts (15).

13. Dispositif selon les revendications 2 à 8, **caractérisé en ce que** l'élément d'entrée (11) est réalisé en tant que joystick et est monté sur ressort en-dessous d'un couvercle de boîtier (261), la calotte (12) étant réalisée de manière convexe.

14. Dispositif selon les revendications 2 à 8, **caractérisé en ce que** l'élément d'entrée (11) est monté sur ressort par rapport à la plaque de base (14) dans le boîtier (231), et **en ce que** celui-ci est relié de manière fixe à la plaque de base (14), la plaque de base (14) présentant un évidement (273) à travers lequel la calotte (12) actionne un écran tactile (272).

15. Dispositif selon les revendications 1 à 8 et 14, **caractérisé en ce que** l'élément d'entrée (11) et le boîtier (231) présentant des propriétés élastiques forment un module.

16. Dispositif selon les revendications 2 à 8, **caractérisé en ce que** la plaque de base (14) est équipée d'un électroaimant commandé par logiciel transmettant une information en retour tactile sur l'état d'actionnement de l'élément d'entrée (11).

17. Dispositif selon les revendications 2 à 8, **caractérisé en ce que** l'on prévoit un circuit intégré de commutation en-dessous de l'élément d'entrée (11), à savoir sur la plaque de base (14), lequel est muni sur son côté supérieur d'une pluralité d'électrodes assurant la fonction de contacts, le circuit intégré de commutation disposant de deux bornes d'alimentation en courant, d'une ligne de données d'entrée pour la configuration et de trois sorties de données pour les valeurs x, y et z des axes correspondants dans l'espace.

18. Dispositif selon les revendications 2 à 8 et 15, **caractérisé en ce que** la plaque de base (14) repose selon une liaison détachable sans outil, de manière repliable ou enfichable, sur un afficheur (271) avec un écran tactile intégré (272), de sorte que lors de l'actionnement de l'élément d'entrée (11), la calotte convexe (12) actionne l'écran tactile (272) à travers un évidement (273) dans la plaque de base (14) de manière à ce que l'écran tactile (272), du fait du détachement mécanique par la calotte (12), enregistre une position spécifique en un point différent sur la surface de l'écran tactile selon l'angle d'actionnement de l'élément d'entrée (11), et retransmet cette position pour la suite du traitement, suite à quoi en fonction de la position, il s'en suit un affichage sur l'afficheur (271).

19. Procédé pour un dispositif selon les revendications 1 à 18, **caractérisé en ce qu'**une unité d'exploration (16) vérifie les lignes et colonnes d'une matrice de contacts (15) à un rythme rapide d'environ 50x par seconde les unes après les autres concernant une connexion électrique, une combinaison au choix de contacts de la matrice de contacts (15) pouvant être fermée, et l'unité d'exploration (16) générant un motif de bits avec tous les contacts possibles à partir de cette vérification et le retransmettant à une unité de reconnaissance de motifs (17) pour un traitement suivant, moyennant quoi une unité de reconnaissance de motifs (17) interprète un motif de bits délivré par une unité d'exploration (16), dont les bits représentent des contacts fermés (62) d'une matrice de contacts (15), de telle sorte qu'à partir de la position dans l'espace (63) des contacts fermés (62) une valeur moyenne arithmétique est formée et qu'à partir de ce résultat, on détermine la position inclinée de l'élément d'entrée (11) le long d'un axe.

20. Procédé pour un dispositif selon la revendication 19, **caractérisé en ce que** l'unité de reconnaissance de motifs (17) interprète un motif de bits délivré par une unité d'exploration (16), dont les bits représentent des contacts fermés d'une matrice de contacts (15), de telle sorte qu'à partir du nombre des contacts fermés une somme est formée, et qu'à partir de ce résultat on détermine l'aplatissement d'une calotte (12) lors de l'actionnement de l'élément d'entrée (11) à partir duquel on peut déterminer la pression d'application d'un élément d'entrée (11).

21. Procédé pour un dispositif selon les revendications 19 et 20, **caractérisé en ce que** l'unité de reconnaissance de motifs (17) interprète un motif de bits délivré par une unité d'exploration (16), dont les bits représentent des contacts fermés (62) d'une matrice de contacts (15), de telle sorte qu'à partir de la position dans l'espace des contacts fermés (62) deux valeurs moyennes arithmétiques (211 ; 212) sont formées et qu'à partir de ce résultat, on détermine la position inclinée de l'élément d'entrée (11) le long de deux axes.

22. Procédé selon les revendications 19 à 21, **caractérisé en ce que** la calotte (12) d'un élément d'entrée (11) rond ferme une pluralité de contacts sur la matrice de contacts (15), lesquels sont disposés selon une matrice de contacts à deux dimensions, la commande déterminant à partir de la position des contacts fermés l'angle d'actionnement et la direction d'actionnement.

23. Procédé selon les revendications 19 à 22, **caractérisé en ce que** la calotte (12) de l'élément d'entrée (11) ferme jusqu'à deux contacts sur la matrice de contacts (15), un déclenchement latéral fermant un contact individuel et un déclenchement du milieu fermant deux contacts.

24. Procédé selon les revendications 19 à 23, **caractérisé en ce que**, pour mesurer l'activation de l'élément d'entrée (11) d'appareils électroniques, l'élément d'entrée (11) sous la forme d'une touche ou d'un joystick peut être incliné dans plusieurs directions par un opérateur à l'encontre d'une force élastique, suite à quoi une surface bombée électroconductrice sur le côté inférieur (19) de l'élément d'entrée (11) touche une matrice de contacts (15) au niveau de positions changeantes et ferme ainsi un ou plusieurs contacts électriques qui sont évalués par un dispositif électronique de commande se composant d'une unité d'exploration (16) et d'une unité de reconnaissance de motifs (17), l'angle et la direction de l'actionnement de l'élément d'entrée (11) étant déterminés à partir de la position des contacts fermés.

25. Procédé selon les revendications 19 à 24, **caractérisé en ce que** l'on détermine à partir du nombre de contacts fermés la force d'application exercée, le nombre de contacts fermés étant produit par un aplatissement du moyen de contact d'une calotte (12) sur la matrice de contacts (15) suite à une force exercée sur l'élément d'entrée (11).
